# EUROPEAN PATENT APPLICATION

(11) **EP 2 468 597 A1**
(43) Date of publication of application: **27.06.2012**
(21) Application number: 10196260.3
(22) Date of filing: 21.12.2010
(51) Int. Cl.: B60W 10/02, B60W 10/06, B60W 10/08, B60W 20/00, B60W 30/18, F16D 48/06

(54) **Adaptation of a force-to-torque-characteristic for a launch clutch**

(71) Applicant: Saab Automobile AB, 461 80 Trollhättan (SE)
(72) Inventor: Freudenthaler, Pär, 442 92, Romelanda (SE); Berndtson, Tobias, 467 91, Grästorp (SE)
(74) Representative: Haag, Malina Anna

(57) **Abstract**

The present invention relates to a method for adaptation of a Force-to-Torque-characteristic for a launch clutch (124) in a vehicle comprising first (101) and second (102) vehicle propelling machines. Both of said vehicle propelling machines being operably coupled to wheels of said vehicle for propelling said vehicle, the method comprising the steps of:
- propelling said vehicle by said second vehicle propelling machine (102),
- said launch clutch (124) being disengaged such that said first vehicle propelling machine (101) is disengaged from propelling the vehicle,
- initiating reengation of said launch clutch (124) such that said first vehicle propelling machine (101) is starting to propel said vehicle until at least one of a rotation of said first vehicle propelling machine (101) or a change in output torque or output speed in said second vehicle propelling machine (102) is observed,
- recording a force value at this instant acting on said launch clutch (124) for engagement/disengagement thereof, and
- adapting said Force-to-Torque-characteristic such that said force value is used at a torque value of zero.

## Description

### Technical Field

The present invention relates to a method for adaptation of a Force-to-Torque-characteristic for a launch clutch in a vehicle comprising first and second vehicle propelling machines, both of said vehicle propelling machines being operably coupled to wheels of said vehicle for propelling said vehicle.

### Technical Background

Within the field of vehicle propelling machines the trend is to provide a vehicle with several propelling machines, of which one most often is an electric machine operated through batteries in order to reduce fuel consumption and carbon dioxide emissions. Such propelling machines must function well together and the drivability and comfort for driver and passengers must at least remain the same as for a traditional vehicle.

One matter to attend is to design the transmission of the vehicle to smoothly connect and disconnect the different propelling machines. In a transmission a launch clutch is used to fully disconnect a propelling machine from the powertrain. Such launch clutches are generally subjected to wear and to temperature influences during driving. Hereby the friction between the lamellae is altered. The torque transferred through the launch clutch is depending on the force between the lamellae in the launch clutch. When the launch clutch is fully disengaged no torque is transferred, while full torque is transferred when the clutch is fully engaged. This is independent on if the launch clutch is a dry or a wet type of launch clutch. Each launch clutch is accompanied by a Force-to-Torque-characteristic, which thus is not stable but changed over time. This change occurs both during a single ride, and over longer terms. In a manual gear box the driver is adapting the force on the launch clutch instinctively every time the launch clutch is used, but in an automated transmission this adaptation must be made automatically. The Force-to-Torque-characteristic is generally changed in a non-linear way and has a hysteresis in force depending on in which direction the launch clutch is used.

If a vehicle is not provided with a mechanical compensation for wear, an adaptation of this Force-to-Torque-characteristic is all the more important. In vehicles having only one propelling machine, normally an internal combustion engine, this adaptation is performed when the engine is running but disengaged, by measuring a force value when the engine is reengaged by the launch clutch. However, in a vehicle having more than one propelling machine and one of these machines is an internal combustion engine, the adaptation of the Force-to-Torque-characteristic preferably should be able to be performed when the internal combustion engine is not running. It is therefore the object of the present invention to provide a method for adaptation of the Force-to-Torque-characteristic in a vehicle having two propelling machines which functions when one of the propelling machines is not running.

### Summary of the Invention

The object is achieved according to the invention by a method for adaptation of a Force-to-Torque-characteristic for a launch clutch in a vehicle comprising first and second vehicle propelling machines, both of said vehicle propelling machines being operably coupled to wheels of the vehicle for propelling the vehicle, the method comprising the steps of:
- propelling the vehicle by the second vehicle propelling machine,
- the launch clutch being disengaged such that the first vehicle propelling machine is disengaged from propelling the vehicle,
- initiating reengation of the launch clutch such that the first vehicle propelling machine is starting to propel the vehicle until at least one of a rotation of the first vehicle propelling machine or a change in output torque or output speed in the second vehicle propelling machine is observed,
- recording a force value at this instant acting on the launch clutch for engagement/disengagement thereof, and
- adapting the Force-to-Torque-characteristic such that the force value is used at a torque value of zero.

Advantages with the present invention include for example that the Force-to-Torque characteristic of the launch clutch updates to adapt a sufficient force value when torque initiates to be transferred through the launch clutch. Thus, a new value of the force is adapted for a torque value of zero. As the force value is recorded at the instant point of time when torque is initiating to be transferred through the launch clutch, the torque may be approximately zero, but the force value recorded may be adapted for a torque value of zero. This enables a smooth transition of the first propelling machine from being disengaged to be engaged. By recording a force value that is to be used as a torque value of zero by observing at least one of a rotation of the first vehicle propelling machine or a change in output torque or output speed in the second vehicle propelling machine, provides a suitable and reliable method for the vehicle. As both vehicle propelling machines are operably connected to wheels of the vehicle, a change in output torque or output speed of the second vehicle propelling machine may be noticed when the launch clutch is being engaged, due to inertia forces appearing when the first vehicle propelling machine is being engaged. Hereby, the two vehicle propelling machines interact with each other, providing a reliable method for determining an updated force value for a torque value of zero.

A further advantage of the present invention is that the method may be executed without having the first vehicle propelling machine in a vehicle propelling mode, *i.e.* the method may be executed independently of the mode of the first vehicle propelling machine.

According to another aspect of the invention, the method is performed every time the second vehicle propelling machine is propelling the vehicle; the first vehicle propelling machine is disengaged and is being reengaged.

As the method is performed each time the second vehicle propelling machine propels the vehicle and the first vehicle propelling machine is disengaged and is being reengaged, the force value is continuously updated, thus compensating for wear and temperature influences of the launch clutch that occur during driving.

According to another aspect of the invention, the steps are preceded by the step of:
- disengaging the first vehicle propelling machine by disengaging the launch clutch.

Hereby, the vehicle is propelled by the second vehicle propelling machine only. The torque and speed of the second vehicle propelling machine may be noticed and when the first vehicle propelling machine is being reengaged by initiating to engage the launch clutch, a change in output torque and/or output speed of the second vehicle propelling machine may be noticed and a force value at this instant point of time is noticed, further given as the force value of a torque value of zero.

According to another aspect of the invention, the first vehicle propelling machine is shut off.

The advantage of having the first vehicle propelling machine shut off is that the fuel consumption is reduced as well as a reduction of carbon dioxide emissions is provided.

According to another aspect of the invention, both of the vehicle propelling machines are coupled to a first output shaft.

Hereby, the change in output torque and/or output speed may be even further noticed, due to an increased response in inertia forces when the launch clutch is being engaged. Hence, the reliability and accuracy of the method may be even further improved.

According to another aspect of the invention, the first vehicle propelling machine may be coupled to the first output shaft by means of the launch clutch and of a first input gear set having two gear ratios.

The advantage is that the first vehicle propelling machine may change between two numerically different gears. Thus, the first input gear set may choose gear depending on, for example, the speed of the vehicle, such that the first vehicle propelling machine may propel the vehicle in its best mode of operation.

According to another aspect of the invention, the first vehicle propelling machine may be coupled to the first output shaft via the first input gear set and the second vehicle propelling machine may be coupled to the first output shaft via a second input gear set.

The first and second vehicle propelling machines are coupled to the first output shaft via two different gear sets, thus providing the vehicle to be propelled by one of the vehicle propelling machines independent by the other.

According to another aspect of the invention, the first input gear set comprises a first pair of meshing gear wheels and the second input gear set comprises a second pair of meshing gear wheels.

Hereby, the vehicle propelling machines may be provided with gear ratios that sufficiently enable the vehicle to be propelled by each one of the vehicle propelling machines. Furthermore, this arrangement is well known and provides a simple and compact gear wheel arrangement.

According to another aspect of the invention, the first input gear set and the second input gear set share a common gear wheel which is coupled to the first output shaft.

The advantage is that the first and second vehicle propelling machines may cooperate with each other. This may further reduce fuel consumption and provide vehicle propelling machines that propel the vehicle in their most sufficient modes of operation. Furthermore, this arrangement is well known and provides a simple and compact gear wheel arrangement.

According to another aspect of the invention, the first input gear set further comprises a third pair of meshing gear wheels, of which one of the gear wheels is coupled to the first output shaft, such that the first and third pairs of gear wheels together form the first input gear set having two gear ratios for the first vehicle propelling machine.

By providing a third pair of meshing gear wheels on the first input gear set the first vehicle propelling may be provided with two numerically different gears in the first input gear set. As one of the gears of the third pair of meshing gear wheels is coupled to the first output shaft, the first and second vehicle propelling machines may further cooperate with each other as above mentioned, but with the first vehicle propelling machine in a numerically different gear.

According to another aspect of the invention, the launch clutch in an unbiased condition is closed.

When having the launch clutch in an unbiased condition, no energy needs to be provided to the launch clutch, which is advantageous in a fuel consumption point of view. For decreased energy consumption of the vehicle, regardless whether the first vehicle propelling machine should be engaged or disengaged, the launch clutch may be put in a closed condition and at the same time the first input gear set may be put in a neutral position, such that only the second vehicle propelling machine propels the vehicle. Furthermore, when the vehicle is in need of the first vehicle propelling machine, the launch clutch may, for a short period of time, be disengaged such that the first input gear set may be put in a suitable gear, depending on for example the speed of the vehicle. Thereafter, the launch clutch is reengaged to its closed condition, which thereafter does not require any additional energy to the launch clutch.

According to another aspect of the invention, the vehicle is provided with only two vehicle propelling machines.

Hereby, optimal drivability and fuel economy is combined with a reduced cost for propelling machines as seen in relation to prior art vehicles. Furthermore, the space needed to house the propelling machines is limited and by having only two vehicle propelling machines the needed space may be reduced.

According to another aspect of the invention, the first vehicle propelling machine is an internal combustion engine.

According to another aspect of the invention, the second vehicle propelling machine is an electric machine functioning both as motor and generator.

By providing an internal combustion engine as the first vehicle propelling machine, the internal combustion engine may support the electric machine if, for example, the vehicle is started after having been parked for a long time in cold weather with low powered batteries, or if driving under tough conditions, such as extremely hilly roads, where the electric machine may not be able to provide sufficient power over time.

The electric machine thus has two objectives, where one is to propel the vehicle and the other to generate electric power to a battery. The electric machine may function as a generator when the vehicle is propelled by the first vehicle propelling machine, during generative braking or during deceleration of the vehicle. Thereby only one electric machine instead of two may be used and a more cost effective vehicle may be produced.

### Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 schematically illustrates a gear arrangement for a hybrid electric vehicle according to the invention,
Fig. 2 schematically illustrates an alternative gear arrangement for a hybrid electric vehicle according to the invention,
Fig. 3A ― 3E schematically illustrate the different stages of the method for adaption of a Force-to-Torque characteristic for the launch clutch in the hybrid electric vehicle of the invention, and
Fig. 4 is a flow-chart schematically illustrating the method for adaption of the Force-to-Torque characteristic for the launch clutch in the hybrid electric vehicle of the invention.

### Detailed Description of Preferred Embodiments of the Invention

The present invention relates to vehicles in general, but more specifically to passenger cars of a size between two to nine passengers, including a driver. The present invention furthermore relates according to the preferred embodiments to vehicles being provided with two propelling machines 101, 102, of which one is an electric machine 102 and the other is an internal combustion engine 101. The primary propelling is provided by the electric machine 102, which is larger in size in terms of electrical effect than the internal combustion engine 101. However, the present invention also functions well in vehicles having two or more propelling machines of any kinds.

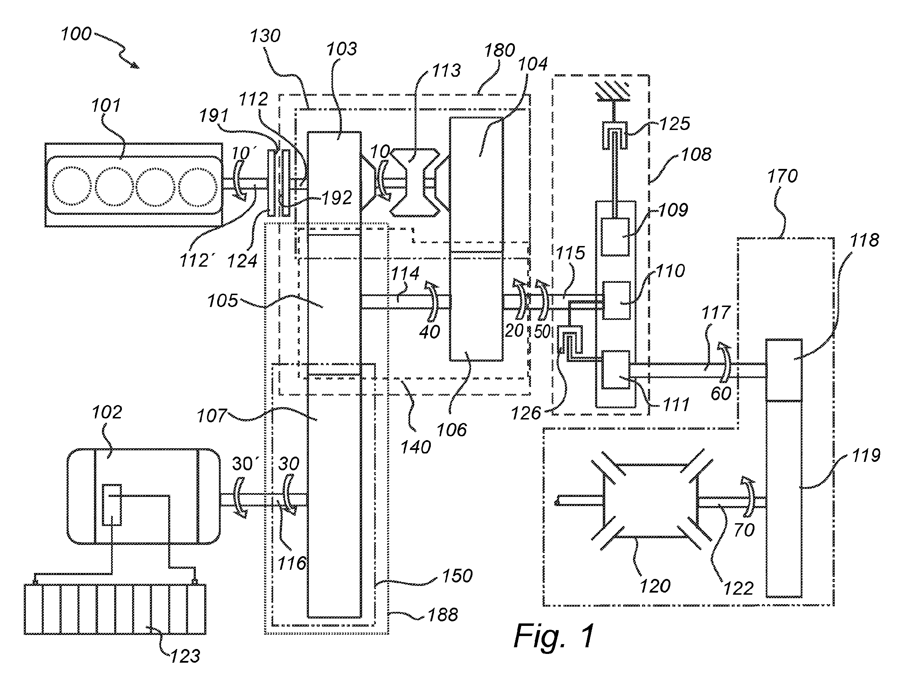

Figure 1 schematically illustrates a gear arrangement for a hybrid electric vehicle, such as a passenger car, which comprises a first input gear set 180, a second input gear set 188 and a first output gear set 108, wherein the first input gear set 180 is connected in series with said first output gear set 108. In more detail the first input gear set comprises a first input member 130, which is arranged to receive a first input torque 10 from an engine 101, such as an internal combustion engine (ICE). The first input gear set is further arranged to transmit the first torque to a first output member 140 of the first input gear set under a selectable first or second resulting gear ratio. In other words, the first output member 140 is arranged to receive a first output torque 20, which is equal to the first input torque being acted on by the first or second resulting gear ratio. In yet more detail, the first input member 130 comprises a first input shaft 112, 112', as well as a first input gear wheel 103 and a second input gear wheel 104 arranged on the input shaft. A moveable locking device 113 or a shift sleeve is provided on the shaft 112, for selectively engaging with the first and second input gear wheels 103, 104, and thereby selectively providing a locking engagement between the first input gear wheel 103 and the first input shaft 112, and between the second input gear wheel 104 and the first input shaft 112, respectively. The locking engagement between a gear wheel and a shaft translates a rotating motion of the gear wheel to the shaft.

Moreover, the first output member 140 comprises a first output shaft 114, as well as a first output gear wheel 105 and a second output gear wheel 106 arranged on the first output shaft 114. The first output gear wheel 105 meshes or engages with the first input gear wheel 103, and the second output gear wheel 106 meshes or engages with the second input gear wheel 104, respectively. Consequently, a first torque 10 received by the first input shaft 112 may be transmitted to the first output shaft either via the first input gear wheel 103 and the first output gear wheel 105, during which it is acted on by the first resulting gear ratio, or via the second input gear wheel 104 and the second output gear wheel 106, during which it is acted on by the second resulting gear ratio.

There are alternative ways of providing the first and second gear ratios, e.g. by use of a planetary gear set or by use of a continuously variable transmission (CVT). Turning to the second input gear set, it comprises a second input member 150, which is arranged to receive a second input torque 30 from an electric machine 102, such as an electric motor/generator. The electric motor/generator is electrically connected to an energy storage device 123 or battery, such that electric energy stored in the battery may be provided to the motor/generator and converted into a torque 30 provided to the second input member 150. The second input gear set is further arranged to transmit the second torque 30 to a second output member 140 of the second input gear set under a third resulting gear ratio. In other words, the second output member 140 is arranged to receive a second output torque 40 equal to the second input torque being acted on by the third resulting gear ratio. In yet more detail, the second input member 150 comprises a second input shaft 116, as well as a third input gear wheel 107 arranged on the second input shaft. Moreover, the second output member 140 comprises a second output shaft 114, as well as a third output gear wheel 105 arranged on the second output shaft. The third output gear wheel 105 meshes or engages with the third input gear wheel 107. Consequently, a second input torque 30 received by the second input shaft 116 may be transmitted to the second output shaft via the second input gear wheel 107 and the second output gear wheel 105 during which it is acted on by the third resulting gear ratio.

Further, both the first output shaft and the second output shaft 114 are connected to a third input shaft 115 of the first output gear set 108. According to one example, and as illustrated in Figure 1, the first and second output shafts and the third input shaft are one and the same. Moreover, the first output shaft and the second output shaft are also one and the same; as well as the first output gear wheel and the second output gear wheel, which are also one and the same.

Turning to the first output gear set 108, it comprises a third input member 115, which is arranged to receive a third input torque 50. The first output gear set 108 is further arranged to transmit the third input torque 50 to a third output member 170 of the first output gear set 108 under a fourth and fifth resulting gear ratio. In other words, the third output member 170 is arranged to receive a third output torque 60 equal to the third input torque 50 being acted on by the fourth or fifth resulting gear ratio. In yet more detail, the first output gear set 108 may be a planetary gear set, comprising a first, second and third node 109, 110, 111, wherein the first node 109 may be a ring gear, the second node 110 may be a sun gear, and the third node 111 a planetary carrier. The fourth resulting gear ratio may be provided by locking the ring gear to a stationary member by means of a first clutch 125. The fifth resulting gear ratio may be provided by locking the sun gear and the planetary carrier to each other by means of a second clutch 126, resulting in a fifth resulting gear ratio equal to 1:1.

In more detail the third output member may have a final gear set, comprising a final input gear wheel 118 arranged on a fourth input shaft 117 being the same as the third output shaft, and a final output gear wheel 119 arranged on a fourth output shaft, wherein the final input gear wheel and the final output gear wheel meshes or engages with each other so as to transmit a rotating motion from the fourth input shaft to the fourth output shaft. The final input gear wheel 118 and the final output gear wheel 119 are arranged to provide a sixth gear ratio from the fourth input shaft 117 to the fourth output shaft 122 in the form of an output torque 70. The fourth output shaft is further connected to a differential 120. The differential 120 is adapted to be connected to wheels of the hybrid electric vehicle in a generally known manner.

A launch clutch 124 is provided on the first input shaft 112, 112' thereby dividing the first input shaft 112, 112' into two parts. The first part 112' is coupled between the ICE 101 and the launch clutch 124, and the second part 112 is coupled between the launch clutch 124 and the first input gear set 180. The launch clutch 124 comprises two lamellae 191, 192 which when the launch clutch 124 is fully engaged are pressed together thus transferring a torque there between. When the launch clutch 124 is fully disengaged, the two lamellae 191, 192 are fully separated such that no torque is transferred. One lamella 191 is connected to the first part 112' of the input shaft, and the other lamella 192 is connected to the second part 112 of the first input shaft. The launch clutch 124 is a dry type of launch clutch and is controlled in a known manner.

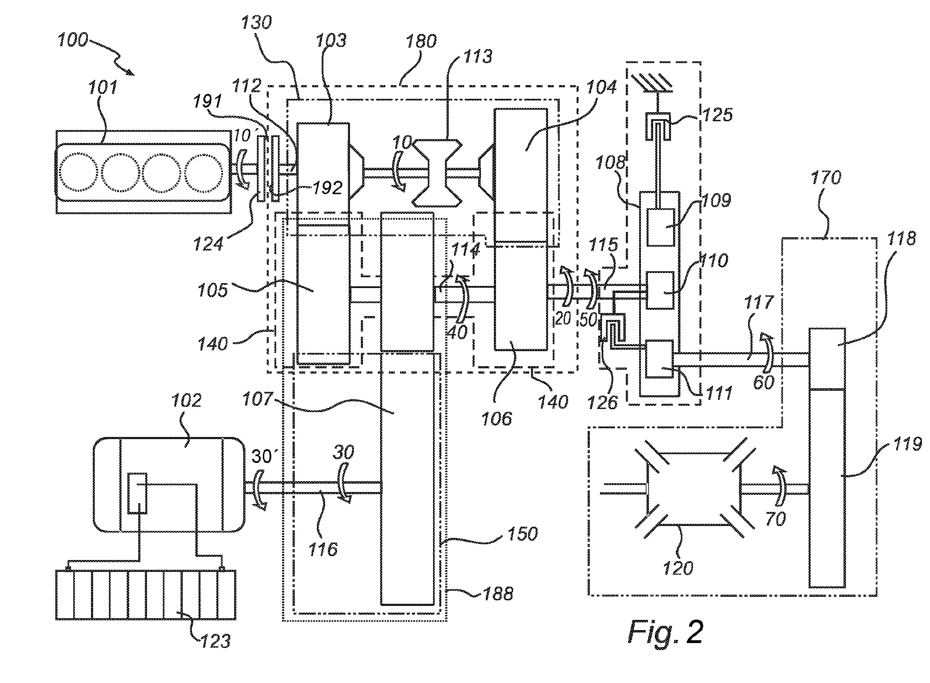

An alternative embodiment is schematically illustrated in Figure 2. The embodiment illustrated in Figure 2 is identical to the one described in relation to Figure 1, except that the third output gear wheel 208 and the first output gear wheel 105 are not one and the same. The third output gear wheel 208 is instead a separate gear wheel, arranged between the first output gear wheel 105 and the second output gear wheel 106 on the first output shat 114. The first output shaft being the same as the second output shaft. Consequently, the third input gear wheel does not engage with the first output gear wheel 105, but with the third output gear wheel 208.

The following description of e.g. different driving modes, all descriptions relate both to the gear arrangement described in relation to Figure 1 as well as the gear arrangement described in relation to Figure 2. In a pure electric mode of driving a second input torque 30 provided to the second input member may be transmitted to the third output member 170, via the second input gear wheel and the second output gear wheel 105 or 208, wherein the second input gear set acts on the second input torque by a resulting third gear ratio, thus providing a second output torque 40. Additionally, the first output gear set may be set to act on the second output torque by a fourth resulting gear ratio or a fifth resulting gear ratio, thus providing a third output torque 60 to the third output member 117. Consequently, there is provided two effective gears to the electric motor: one wherein the third and fourth resulting gears act on the second torque; and another wherein the third and fifth resulting gears act on the second torque.

In a pure ICE mode of driving, a first input torque 10 provided to the first input member may be transmitted to the output member 170, via the first input gear wheel 103 and the first output gear wheel 105, wherein the first input gear set 180 acts on the first input torque 10 by a resulting first gear ratio, thus providing a first output torque 20. Alternatively, a first input torque 10 provided to the first input member 130 may be transmitted to the first output member 140, via the second input gear wheel 104 and the second output gear wheel 106, wherein the first input gear set acts on the first input torque 10 by a resulting second gear ratio. Additionally, the first output gear set 108 may be set to act on the first output torque by a resulting fourth gear ratio or a resulting fifth gear ratio, thus providing a third output torque 60 to the third output member 170. Consequently, there are provided four gears to the ICE: one wherein the first and fourth resulting gear ratios act on the first input torque; one wherein the second and fourth resulting gear ratios act on the first input torque; one wherein the first and fifth resulting gear ratios act on the first input torque and one wherein the second and fifth resulting gear ratios act on the first torque.

In a hybrid mode of operation, a first input torque 10 provided to the first input member 130 and a second input torque 30 provided to the second input member 150 may simultaneously be applied to the third output member 170 in a similar way as described in relation to the pure electric mode and the pure ICE mode above. In this mode the same resulting gear, i.e. the fourth or the fifth resulting gear, acts on both the electric machine and the engine.

In an ICE slip starting mode of operation, electric energy is converted by the electric machine 102 to a second input torque 20 provided to the second input member. The second torque is transferred to the first input member 130 and the first input shaft, via the second output gear wheel 105; 208, and the first or second input gear wheels 103, 104. Thereafter, the engine is started by slip clutch action, using the launch clutch 124 connecting the engine to the first input member 112, 112'.

In a charging mode of operation, the motor/generator acts as a generator. A first input torque 10 is provided to the first input member 130 and is transferred to the second input member 150 via the first input and output gear wheels 103, 105, or the second input and output gear wheels 104, 106; and thereafter via the third output and input gear wheels. The electric machine converts the torque or power received by the second input member to electric energy which is stored in the battery 123.

In a regenerative braking mode of operation, the motor/generator acts as a generator. A third torque is provided to the third output member 170 and is transferred to the third input member 115 and thereafter to the second input member 150 via the third output and input gear wheels. The electric machine converts the torque received by the second input member to electric energy which is stored in the battery 123.

The charging mode of operation and the regenerative braking mode of operation may be performed simultaneously.

The charging mode of operation may be performed simultaneously with the ICE driving mode of operation, by e.g. applying a suitable voltage to the electric machine. In other words, the third output member 170 receives a first torque 60 from the engine as described in relation to the ICE only driving mode of operation, simultaneously as the electric machine receives a second torque 30 from the engine as described in relation to the charging mode of operation. In other words, a first input torque 10 from the first input member is simultaneously transmitted to the third output member 170 as a first torque portion 60, and to the second input member as a second torque portion 30.

In the following, the method for adaption of a Force-to-Torque characteristic of the dry launch clutch 124 in the above hybrid electric vehicle is described. The method may be applied to the embodiments disclosed in both Figure 1 and Figure 2. The method may further be applied to other embodiments of a vehicle having at least a first and a second vehicle propelling machine 101, 102 which are operably coupled to wheels of the vehicle for propelling thereof.

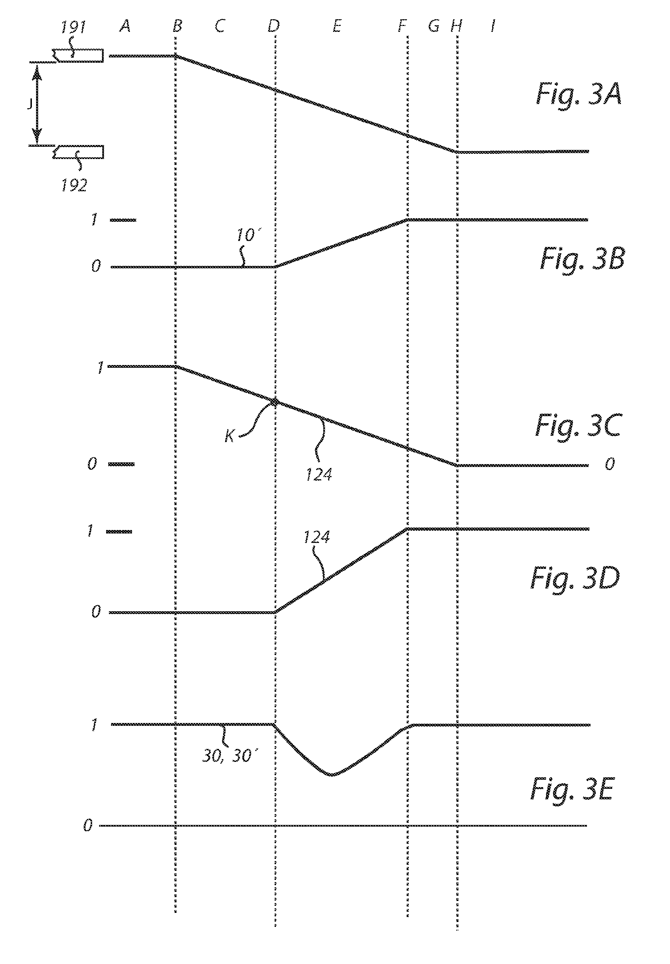

Attention is now drawn to Figures 3A ― 3E, which illustrate the different steps of the method for adaption of a Force-to-Torque characteristic of the dry launch clutch 124 in the above disclosed hybrid electric vehicle.

Figure 3A illustrates the condition for the lamellae 191, 192 when the launch clutch 124 is disengaged and initiates to engage. Sign J illustrates the distance between the lamellae 191, 192 during the different stages A ― I of the method.

Figure 3B illustrates the rotation 10' of the internal combustion engine 101 during the different stages A ― I of the method, where 0 illustrates no rotation of the ICE and 1 illustrates full rotation of the ICE.

Figure 3C illustrates the force acting on the two lamellae 191, 192 of the launch clutch 124 for the different stages A ― I of the method, where 0 illustrates no force acting on the launch clutch 124 and 1 illustrates full force acting on the launch clutch 124. Sign K illustrates the force value at the stage D, which is described in further detail below.

Figure 3D illustrates the torque transferred through the launch clutch 124 for the different stages A ― I of the method, where 0 illustrates no torque transfer and 1 illustrates full torque transfer.

Finally, Figure 3E illustrates the torque 30 and the speed 30' of the electric machine for the different stages A ― I of the method, where 0 illustrates no output torque 30 or output speed 30' of the electric machine and 1 illustrates a continuous output torque 30 or output speed 30' of the electric machine.

The vertical columns and dashed lines A ― I illustrate the different stages of the method for adaption of the Force-to-Torque characteristic of the dry launch clutch 124 of the above hybrid electric vehicle. More specifically, A illustrates a stage when the electric machine 102 propels the vehicle and the launch clutch 124 is fully disengaged. B illustrates an instant point of time when the launch clutch 124 initiates to engage. C illustrate a stage between stage B and a stage D, where stage D illustrates an instant point of time when engagement of the launch clutch initiates, i.e. the lamellae 191, 192 initiate contact with each other. Stage E illustrates when the launch clutch 124 further engages, and stage F illustrates an instant point of time when the launch clutch 124 is almost fully engaged. Stage G illustrates the last step before the launch clutch 124 is fully engaged. At the instant point of time when the launch clutch 124 is fully engaged is illustrated by the stage H, and I illustrates the stage when the launch clutch 124 is still in a fully engaged position.

Now referring to the method for adaption of the Force-to-Torque characteristic for the dry launch clutch 124 of the above hybrid electric vehicle. When adaption of the Force-to-Torque characteristic is to be executed, the vehicle may be propelled by the electric machine 102 only and the launch clutch 124 may be disengaged, such that the lamellae 191, 192 of the launch clutch 124 may be fully separated from each other, i.e. there may be a full distance J between the lamellae 191, 192. This adaption may be executed each time the ICE 101 is disengaged from the first input gear set 180, *i.e.* when the launch clutch 124 is in a disengaged position. The adaption may also be executed at predetermined intervals, such that the adaption is not executed each time the ICE 101 is disengaged from the first input gear set 180, but at predetermined periods. Furthermore, the ICE 101 and electric machine 102 may both propel the vehicle, as described in the above hybrid mode of operation, but when the ICE 101 is disengaged the vehicle may be propelled by the electric machine 102 only and the adaption may be executed. At this stage A, there is no rotation 10' of the ICE 102 (0 in Figure 3B), the lamellae 191, 192 of the launch clutch 124 are exposed to a maximum force (1 in Figure 3C) to keep the launch clutch 124 in its fully disengaged position. Furthermore, there is no torque transferred through the launch clutch 124 (0 in Figure 3D) and the electric machine 102 propels the vehicle with a continuous torque 30 and speed 30' (1 in Figure 3E).

Thereafter, the launch clutch 124 initiates to engage B, thus the distance J between the lamellae 191, 192 initiates to be reduced. There is still no rotation 10' of the ICE (0 in Figure 3B) which is a sign that no torque is transferred through the launch clutch 124 (0 in Figure 3D) and the vehicle may be propelled by the electric machine 102 only. However, as the launch clutch 124 initiates to engage, the force on the launch clutch 124 initiates to be reduced. As the distance J between the lamellae 191, 192 of the launch clutch 124 further reduces in stage C, the force on the lamellae 191, 192 of the launch clutch 124 continue to decrease.

Now turning to stage D, which illustrates the instant point of time when the engagement of the launch clutch 124 initiates, *i.e*. the lamellae 191, 192 initiate contact with each other. The launch clutch 124 initiates to provide a torque 10' from the ICE 101. At this stage D, a change in rotation 112' of the ICE or a change in output torque 30 or output speed 30' of the electric machine 102 may be observed. Such observation of change may be measured by any suitable means currently available. The force value K at this stage D is recorded by a sensor or other force sensing means. The recorded force value K is used in the Force-to-Torque characteristic and is adapted as a new force value for a torque value of zero, which may be stored in a vehicle computer or other suitable device for storing information of the vehicle.

During stage E, the launch clutch 124 continues to further engage, i.e. the distance J between the lamellae 191, 192 further reduces. The rotation 10' of the ICE 101 as well as the torque through the launch clutch 124 increases. Furthermore, the force on the lamellae 191, 192 of the launch clutch 124 continuously decreases. Also, there may still be a notice of change in output torque 30 and/or output speed 30' of the electric machine 102.

At the stage F, the launch clutch 124 is almost fully engaged and a small slip may be present between the lamellae 191, 192 of the launch clutch 124. Despite this small slip between the lamellae 191, 192 of the launch clutch 124, full rotation 10' of the ICE 101 (1 in Figure 3B) as well as full torque through the launch clutch 124 (1 in Figure 3D) may be provided for the vehicle. Thus, the small amount of slip may not be noticed for the driver or passenger(s) of the vehicle. Furthermore, such small amounts of slip may not affect the launch clutch in a negative way and may be fully acceptable. Preferably, the small amount of slip may approximately be up to about 10 revolutions per minute.

Now referring to stages H and I, illustrating the condition when the launch clutch 124 is fully engaged, i.e. the lamellae 191, 192 are at their minimum distance J between each other. Furthermore, full rotation 10' of the ICE 101 as well as full torque through the launch clutch 124 may be provided. The force on the lamellae 191, 192 of the launch clutch 124 has been reduced to approximately zero (0 in Figure 3C), thereby the launch clutch 124 may not require any additional energy as it is normally closed. Also, the change of output torque 30 and/or output speed 30' may no longer be noticed. However, a small slip may still be present between the lamellae 191, 192 of the launch clutch 124.

The vehicle may at this moment be propelled by the ICE 101 as well as the electric machine 102 according to the above hybrid mode of operation. However, the first input gear set 180 may be put in neutral position, such that the vehicle is still propelled by the electric machine 102 only.

When thereafter disengaging the launch clutch 124 to, for instance, change to a numerically different gear on the first input gear set 180, the force value K is updated in the Force-to-Torque characteristic to represent a torque value of zero. Also, when initiating to reengage the launch clutch, the above mentioned procedure starts over again.

The above mentioned method illustrates the adaption of the Force-to-Torque characteristic for a normally closed dry type of launch clutch 124 when the electric machine 102 propels the vehicle with a continuous torque 30 and speed 30'. However, it should be noticed that this by no means limit the scope of the present invention, which is just as applicable with a variation of torque 30 and speed 30' of the electric machine 102. In such a case the torque 30 and speed 30' of the electric machine 102 may vary before and after the engagement of the launch clutch 124. Also, the method may just as well be executed for a normally open type of launch clutch 124, hence Figure 3C would have a reversed behaviour such that the force is approximately zero at stage A and a full force between the lamellae 191, 192 is achieved at the instant point of time H.

Furthermore, the method is not limited to a dry type of launch clutch 124, but may just as well be executed for a wet type of launch clutch. In such a case, Figure 3A may be replaced by a figure illustrating the pressure behaviour of the wet type of launch clutch. The curve may at stage A have no pressure or a full pressure depending on the type of wet clutch preferably used.

Furthermore, Figures 3A ― 3D illustrate linear behaviour between the different stages of the method. It should be noted that the behaviour between the different stages just as well may be in a non-linear embodiment. The non-linear behaviour of Figure 3E may just as well be linear and do not necessarily have to continue throughout the entire stage E.

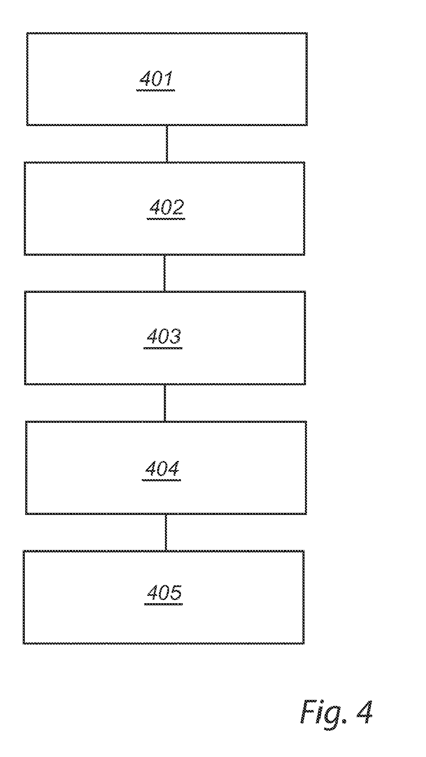

Finally, to summarise the method for adaption of the Force-to-Torque characteristic of the above hybrid electric vehicle, a flow-chart is illustrated in Figure 4 schematically showing the steps of the method.

In the first step 401, the launch clutch 124 is disengaged, such that the ICE 101 is disconnected from the first input gear set 180.

In the second step 402, the vehicle is propelled by the electric machine 102 only.

In the third step 403, the launch clutch 124 initiates to reengage such that the ICE 101 is starting to propel the vehicle. Furthermore, a change in rotation 10' of the ICE or a change in output torque 30 or output speed 30' of the electric machine 102 is observed by means of a measuring device.

In the fourth step 404, the force value of the launch clutch 124 at the instant acting of the third step 403 is recorded. This force value may be recorded by a sensor or other force sensing means.

Finally, in the fifth step 405, the recorded force value of the launch clutch 124 in the fourth step 404 is used at a torque value of zero. The Force-to-Torque value may be stored in a vehicle computer or other suitable device for storing information of the vehicle.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A method for adaptation of a Force-to-Torque-characteristic for a launch clutch (124) in a vehicle comprising first (101) and second (102) vehicle propelling machines, both of said vehicle propelling machines being operably coupled to wheels of said vehicle for propelling said vehicle, the method comprising the steps of:
- propelling said vehicle by said second vehicle propelling machine (102),
- said launch clutch (124) being disengaged such that said first vehicle propelling machine (101) is disengaged from propelling the vehicle,
- initiating reengation of said launch clutch (124) such that said first vehicle propelling machine (101) is starting to propel said vehicle until at least one of a rotation of said first vehicle propelling machine (101) or a change in output torque or output speed in said second vehicle propelling machine (102) is observed,
- recording a force value at this instant acting on said launch clutch (124) for engagement/disengagement thereof, and
- adapting said Force-to-Torque-characteristic such that said force value is used at a torque value of zero.

2. A method according to claim 1, in which said method is performed every time said second vehicle propelling machine (102) is propelling said vehicle, said first vehicle propelling machine (101) is disengaged and is being reengaged.

3. A method according to any one of claims 1 to 2 preceded by the step of:
- disengaging said first vehicle propelling machine (101) by disengaging said launch clutch (124).

4. A method according to any one of the preceding claims, wherein said first vehicle propelling machine (101) is shut off.

5. A method according to any one of the preceding claims, in which both of said vehicle propelling machines (101, 102) are coupled to a first output shaft (114).

6. A method according to claim 5, in which said first vehicle propelling machine (101) is coupled to said first output shaft (114) by means of said launch clutch (124) and of a first input gear set (180) having two gear ratios.

7. A method according to any one of claims 5 to 6, wherein said first vehicle propelling machine (101) is coupled to said first output shaft (114) via said first input gear set (180) and said second vehicle propelling machine (102) is coupled to said first output shaft (114) via a second input gear set (188).

8. A method according to claim 7, wherein said first input gear set (180) comprises a first pair of meshing gear wheels (103, 105) and said second input gear set (188) comprises a second pair of meshing gear wheels (107, 105).

9. A method according to any one of claims 7 to 8, wherein said first input gear set (180) and said second input gear set (188) share a common gear wheel (105) which is coupled to the first output shaft (114).

10. A method according to any one of claims 6 to 9, wherein said first input gear set (180) further comprises a third pair of meshing gear wheels (104, 106), of which one of said gear wheels (106) is coupled to said first output shaft (114), such that said first (103, 105) and third (104, 106) pairs of gear wheels together form said first input gear set (180) having two gear ratios for said first vehicle propelling machine (101).

11. A method according to any one of the preceding claims, in which said launch clutch (124) in an unbiased condition is closed.

12. A method according to any one of the preceding claims, wherein said vehicle is provided with only two vehicle propelling machines (101, 102).

13. A method according to any one of the preceding claims, wherein said first vehicle propelling machine (101) is an internal combustion engine.

14. A method according to any one of the preceding claims, wherein said second vehicle propelling machine (102) is an electric machine functioning both as motor and generator.
